# EUROPÄISCHE PATENTANMELDUNG

(11) **EP 3 434 499 A2**
(43) Veröffentlichungstag der Anmeldung: **30.01.2019**
(21) Anmeldenummer: 18181834.5
(22) Anmeldetag: 05.07.2018
(51) Int. Cl.: B60C 23/06, B60G 17/019, G01B 7/14, G01B 7/30, G01D 5/14, B62D 15/02

(54) **VERFAHREN UND VORRICHTUNG ZUR ERFASSUNG DER AUSLENKUNG EINES RADES**

(30) Priorität: 27.07.2017 DE 102017212911
(71) Anmelder: Robert Bosch GmbH, 70442 Stuttgart (DE)
(72) Erfinder: Stegmaier, Juergen, 72074 Tuebingen (DE); Dackermann, Tim, 72072 Tuebingen (DE); Greiner, Rinaldo, 72762 Reutlingen (DE); Schnee, Jan, 71093 Weil Im Schoenbuch (DE)

(57) **Zusammenfassung**

Mit der Erfindung wird ein Verfahren sowie eine Vorrichtung zur Erfassung der Auslenkung wenigstens eines Rades eines Zweirads beschrieben. Ein Magnet wird am Rad befestigt, ein dreiachsiger Magnetfeldsensor am Rahmen fixiert. Das Magnetfeld wird während der Rotation erfasst. Eine Auslenkung der mit Stoßdämpfern versehenen Aufhängung des Hinterrads oder des mit Stoßdämpfern versehenen Vorderrads in Bezug auf den Rahmen wird aus den erfassten Signalen bestimmt. Alternativ kann aus den erfassten Signalen auch eine Drehung des Lenkers bestimmt werden.

Weiterhin wird ein Steuerverfahren bzw. eine Steuervorrichtung mit diesem Steuerverfahren beansprucht, welches ein erfindungsgemäßes Verfahren ausführt und beispielsweise die Dämpfungseigenschaften der Stoßdämpfer anpasst. Schlussendlich wird auch ein Zweirad, insbesondere ein Fahrrad, beansprucht, welches eine derartige Erfassungsvorrichtung bzw. Steuervorrichtung aufweist.

## Beschreibung

Die Erfindung betrifft ein Verfahren sowie eine Vorrichtung zur Erfassung der Auslenkung eines Rades, insbesondere eines Rades an einem Zweirad. Darüber hinaus wird ein Steuerungsverfahren, eine Steuervorrichtung sowie ein Zweirad mit einer derartigen Steuervorrichtung beansprucht, welche die Erfassung der Auslenkung eines Rades verwenden.

### Stand der Technik

Zur berührungslosen Abstands- und Einbaulagenmessung von rotierenden Teilen werden sowohl optische als auch magnetische Sensoren verwendet. So erfolgt beispielsweise die Geschwindigkeitsmessung bei Fahrrädern während der Fahrt mittels magnetischer Raddrehzahlsensoren, bei dem die Drehung der Fahrradreifen erfasst wird. Dabei sind die Raddrehzahlsensoren als Magnetsensoren beispielsweise ortsfest an der Vorderradgabel vorgesehen, die bei jedem Durchlauf eines Magneten an der Speicher einen Impuls liefern. Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden. Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr ungenau. Weiterhin besteht bei dieser Form der Geschwindigkeitserfassung sehr leicht die Möglichkeit einer Manipulation. Auch die Erfassung der Orientierung des Rades bzw. dessen dynamisches Verhalten sowohl seitlich als auch senkrecht zur Fahrtrichtung ist aus dieses Signalen nicht ableitbar.

Als Alternative können Beschleunigungssensoren verwendet werden, die ebenfalls eine Geschwindigkeitsinformation erzeugen können. Zusätzlich können durch derartige Beschleunigungssensoren auch die Bewegung seitlich zur Fahrtrichtung sowie senkrecht dazu erfasst werden, um beispielsweise die Lenkrichtung abzuleiten. Der Betrieb derartiger Beschleunigungssensoren ist jedoch energieaufwändiger, so dass diese Art der Erfassung eher bei elektrifizierten Fahrzeugen zum Einsatz kommt.

Mit der vorliegenden Erfindung wird ein System beschrieben, bei dem mittels der Erfassung von Sensorsignalen eines Magnetsensors auf die Einbaulage bzw. Orientierung eines Rades geschlossen werden kann.

### Offenbarung der Erfindung

Mit der Erfindung wird ein Verfahren sowie eine Vorrichtung zur Erfassung der Auslenkung wenigstens eines Rades eines Zweirads beschrieben. Weiterhin wird ein Steuerverfahren bzw. eine Steuervorrichtung mit diesem Steuerverfahren beansprucht, welches ein erfindungsgemäßes Verfahren ausführt. Schlussendlich wird auch ein Zweirad, insbesondere ein Fahrrad, beansprucht, welches eine derartige Erfassungsvorrichtung bzw. Steuervorrichtung aufweist.

Bei dem Zweirad, an dem das erfindungsgemäße Verfahren angewandt werden soll, ist wenigstens ein Rad vorgesehen, welches wenigstens einen Magneten aufweist. Dieser wenigstens eine Magnet kann mit seiner Polarisation sowohl radial als auch in Umfangsrichtung an dem Rad angeordnet sein. Weiterhin ist vorgesehen, dass das Zweirad wenigstens einen Magnetfeldsensor zur Erfassung des Magnetfelds des wenigstens einen Magneten in dem Rad aufweist. Dieser Magnetfeldsensor ist am Zweirad starr gegenüber der Drehung des wenigstens einen Rades angeordnet, z.B. indem der Magnetfeldsensor direkt oder indirekt mit diesem gekoppelt ist. So könnte der Magnetfeldsensor direkt am Rahmen eines Fahrrads angeordnet sein oder im Falle eines Elektrofahrrads mit Mittelmotor in den Motor integriert sein. Auch die Unterbringung in einer am oder im Rahmen befestigten Energiequelle für den Motor ist denkbar.

Zur Ausführung des erfindungsgemäßen Verfahrens werden vom Magnetsensor zumindest erste Magnetfeldsensorsignale während der Drehung des Rades von dem an diesem Rad befestigten wenigstens einen Magneten erfasst. Die zeitliche Auflösung dieser ersten Magnetfeldsensorsignale wird anschließend dazu genutzt, eine Auslenkungsinformation des erfassten Rades zu erzeugen.

Mit einem derartigen Verfahren bzw. einer Vorrichtung mit einer derartigen Auswerteverfahren kann auf einfache berührungslose Weise erfasst werden, ob sich das mittels einer Aufhängung am Rahmen befestigte Rad aus seiner Normallage im Raum heraus bewegt. So kann eine Verdrehung des Rads in Richtung der Querachse z des Zweirads in Relation zum fix gehaltenen Magnetfeldsensor z.B. am Rahmen und somit eine Stauchung oder Streckung der Aufhängung des (Hinter-) Rads erkannt werden. Zusätzlich oder optional ist auch die Erkennung der Verdrehung in einer der anderen Raumrichtungen denkbar. So kann beispielsweise die Drehung des Vorderrads um die Lenkachse als Drehung um die Hochachse y erkannt werden. Schlussendlich ist durch die Erfassung von Veränderungen der Bewegung in z-Richtung, d.h. quer zur Fahrtrichtung des Zweirads möglich. Auch eine Erkennung von Unregelmäßigkeiten bei der Drehung des Rades ist mittels der Erfassung von Bewegungen des Rades in z-Richtung zu erkennen. Derartige Unregelmäßigkeiten treten auf, wenn das Rad einen Höhenschlag oder einen Seitenschlag aufweist. Das Rad wird dabei teilweise in seinem Umfang aus einer Ebene ausgelenkt, so dass diese Veränderung mittels eines Magneten an der Stelle der Auslenkung oder mittels mehrerer Magnete, die im Umfang des Rades verteilt sind, eine Beschädigung des Rades in Form von veränderten Bewegungsinformationen in Abhängigkeit der Magnetfeldsensorsignale erkennen lassen.

Optional ist vorgesehen, dass ein Einlernvorgang durchgeführt wird, bei dem das System die Radstellung bzw. Orientierung in einer Ausgangslage oder Nulllage erkennt. Dies kann beispielsweise kurz nach der Auslieferung, d.h. im einwandfreien Zustand, in einem Normalbetrieb auf ebener Strecke erfolgen. Es ist auch möglich, den Einlernvorgang nach einer Reparatur, z.B. einem Radwechsel aktiv durchzuführen, um das System auf die neuen Gegebenheiten einzulernen. Alternativ kann die Ausgangslage oder Nulllage auch von vorneherein einprogrammiert sein, so dass kein Einlernvorgang notwendig ist. Die im Betrieb erfassten Magnetsensorsignale werden dann mit den abgespeicherten oder den durch den Einlernvorgang ermittelten Werten verglichen, um eine Auslenkung der Drehung des Rades aus der Ausgangslage bzw. Nulllage zu erkennen.

In einer ersten Realisierung der Erfindung ist lediglich die Erfassung von Magnetfeldsensorsignale zur Erfassung des Drehbewegung in einer Raumrichtung notwendig, z.B. in y-Richtung. Alternativ kann hier auch ein Absolutwert der Magnetfeldsensorsignale erfasst werden. In diesem Fall können jedoch noch weitere Sensordaten notwendig sein, um die verschiedenen möglichen Auslenkungen bzw. Drehungen des Rads eindeutig voneinander zu unterscheiden. Für eine einfache Erfassung der Drehung um die z-Achse reicht der Absolutwert jedoch bei einer entsprechenden Hinterradaufhängung, z.B. mit Stossdämpferkomponenten aus, da hierbei nur eine durch die Bauart bedingte vorgegebene Richtung überwacht werden soll.

Eine Weiterbildung der Erfindung erfasst zusätzlich zu den ersten Magnetfeldsensorsignalen weitere zweite Magnetfeldsensorsignale, wobei vorgesehen ist, dass die ersten und die zweiten Magnetfeldsensorsignale wenigstens zwei unterschiedliche Raumrichtungskomponenten enthält. Hierzu kann sowohl ein einzelner Magnetfeldsensor verwendet werden, der das Magnetfeld in wenigstens zwei Raumrichtungen erfasst oder zwei separate Magnetfeldsensoren, die in unterschiedlicher Raumrichtung hinsichtlich des Magnetfelds empfindlich sind. Die Auslenkungsinformation wird anschließend aus der Kenntnis der unterschiedlichen Magnetfeldstärken in den wenigstens zwei Raumrichtungen bzw. deren zeitlichen Verlauf abgeleitet. Durch die Berücksichtigung zweier Raumrichtungen der Magnetfeldstärke kann die Auslenkung eindeutig zugewiesen werden. Darüber hinaus ist es möglich, gleichzeitig zwei unterschiedliche Auslenkungen bzw. Drehungen zu erkennen, z.B. eine Drehung des Vorderrads um die Hochachse und eine Drehung des Hinterrads um die Hinterradaufhängung um die Querachse. Bevorzugt werden dabei die Magnetfeldsensorsignale in x- und y-Richtung erfasst.

Das Verfahren sowie die Vorrichtung zur Erfassung der Auslenkung eines Rades eines Zweirads kann sowohl nur ein einzelnes Rad, z.B. nur das Hinterrad oder nur das Vorderrad, oder auch beide Räder gleichzeitig überwachen. Falls beide Räder gleichzeitig überwacht werden sollen, muss jedes der Räder wenigstens einen Magneten aufweisen. Der Magnetfeldsensor erfasst dabei die Magnetfeldstärke der Bewegung beider Magneten bei der Bewegung beider Räder. Durch eine geeignete Plausibilisierung der erfassten Magnetfeldsensorsignale lässt sich aus den Messgrößen eine Zuordnung der Magnetfeldsensorsignale zum Vorderrad oder dem Hinterrad ableiten.

Im einfachsten Fall kann das Verfahren die Zuordnung der Magnetfeldsensorsignale zu den Rädern über die Magnetfeldstärke vornehmen, wenn der Abstand der Magnete des Vorder- und Hinterrads bei ansonsten gleichen Magnetfeldstärken der Magnete gegenüber dem Magnetsensor unterschiedlich ist. Aus den so unterschiedlich starken Magnetfeldsensorsignalen lässt sich eine Unterscheidung zwischen den Magneten im Vorderrad und Hinterrad ableiten. Der Fall einer Überlagerung beider Magnetfeldsensorsignale kommt nur in seltenen Betriebssituationen vor und ist zudem aufgrund der zusätzlichen Lenkbewegung des Vorderrads und dessen unterschiedliche Ablaufstrecke in Bezug auf das Hinterrad lediglich temporär und liegt somit nach einigen Umläufen nicht mehr vor. Somit sind die beiden Räder anhand der Magnetfeldsensorsignale nach einigen Umläufen wieder unterscheidbar. Darüber hinaus ist bei dem Magnetfeldsensorsignal im Vorderrad bei Lenkbewegungen eine stärkere Magnetfeldsensorkomponente in z-Richtung zu erkennen, so dass auch über diese Information eine Zuordnung der Magnetfeldsensorsignal zu den Rädern erfolgen kann.

Eine weitere Möglichkeit der Zuordnung der Magnetfeldsensorsignale auf eines der beiden Räder besteht darin, die Magnetfeldstärke der Magneten zu individualisieren, so dass sie eine unterschiedliche Magnetfeldstärke oder ein unterschiedliches zeitlich aufgelöstes Magnetfeldsensorsignal am Ort des unbeweglichen Magnetfeldsensors erzeugen. Zur Unterscheidung könnte alternativ oder zusätzlich auch die Polarisation der Magnete im Vorder- und Hinterrad entgegen ausgerichtet sein. Weiterhin ist denkbar, die Geometrien der Magnete unterschiedlich zu gestalten, z.B. unterschiedlich breit oder lang, um über die Halbwertsbreite des Magnetfeldsensorsignals eine Aussage zur Zuordnung treffen zu können.

Das Verfahren zur Erfassung der Auslenkung wenigstens eines Rads eines Zweirads kann beispielsweise im Rahmen eines Steuerungsverfahrens für eine Dämpferkomponente des Zweirads eingesetzt werden. Hierzu wird wenigstens eine am Zweirad, z.B. einem Fahrrad oder einem Elektrofahrrad, angeordnete Dämpferkomponente, wie einen Stoßdämpfer, in Abhängigkeit von der Auslenkungsinformation angesteuert oder geregelt, um deren Dämpfereigenschaften den erfassten Betriebssituationen anzupassen. Als Dämpferkomponenten können gerade bei einem Fahrrad neben den Stoßdämpfern an dem Vorderrad oder der Aufhängung des Hinterrads an Mountainbikes (sog. Fullys) auch Satteldämpfer oder Gepäckdämpfer angesteuert oder geregelt werden. Darüber hinaus ist auch die Ansteuerung einer Dämpferkomponente im Lenker bzw. im Lenkrohr möglich, durch die eine zu große Lenkbewegung gedämpft werden kann, um einen Unfall zu verhindern. Durch diese Einstellung der Dämpfereigenschaft kann beispielsweise erreicht werden, dass das Hinterrad einen Bodenkontakt und somit eine ausreichend große Haftreibung beibehält. Optional kann diese Steuerung auch für artistische Zwecke verwendet werden, indem bei einem Abheben des Hinterrads dieses noch weiter durch den Stoßdämpfer vom Untergrund weggezogen wird. Für diesen Fall bietet es sich an, das Steuerungsverfahren manuell durch den Fahrer aktivierbar bzw. abschaltbar zu gestalten.

Optional kann auch vorgesehen sein, dass das Steuerungsverfahren in Abhängigkeit der Auslenkinformation einen Eingriff in die Motorsteuerung des Elektrofahrrads vornimmt. Durch diesen Eingriff kann ein möglicher Sturz, der durch die Erkennung eines Überschlags erkannt werden kann, verhindert oder zumindest deren Schaden verringert werden, indem die Erzeugung eines ungewollten Vortriebs verhindert wird. Ein Überschlag kann sowohl durch eine Vergrößerung als auch eine Verkleinerung des Drehwinkels des Hinterrads um die Nulllage hinaus erkannt werden, wenn zusätzliche Parameter, wie beispielsweise eine Neigung erkannt wird.

Entsprechend dem Verfahren und dem Steuerungsverfahren ist auch die Verwendung einer Vorrichtung bzw. einer Steuerungsvorrichtung vorgesehen, die ein derartiges Verfahren ausführt.

Weiterhin wird mit der vorliegenden Erfindung auch ein Zweirad, insbesondere ein Fahrrad, besonders ein Elektrofahrrad, beansprucht, welches eine Auswertevorrichtung mit dem beschriebenen Verfahren oder eine Steuervorrichtung mit einem entsprechenden Steuerverfahren aufweist. Hierzu ist vorgesehen, dass wenigstens eines der Räder wenigstens einen Magneten aufweist, der durch die Drehbewegung des Rads am direkt oder indirekt ortsfest an den Rahmen gekoppelten Magnetfeldsensor ein zeitlich veränderliches Magnetfeld erzeugt.

Der wenigstens eine Magnet kann dabei vorteilhafterweise im Außenbereich des drehenden Rades untergebracht sein, um die Distanz zum Magnetfeldsensor so gering wie möglich zu halten. Denkbar ist hier, den wenigstens einen Magneten am Mantel, in oder an der Felge oder im äußeren Bereich der Speichen anzubringen. Eine besondere Ausgestaltung ist dabei die Unterbringung am oder im Reifenventil.

Die Ausrichtung der Polarisation des wenigstens einen Magneten ist dabei vorteilhafterweise radial nach außen gerichtet. Dadurch wird dem Magnetfeldsensor die größte Magnetfeldstärke zugewandt. Es ist jedoch auch möglich, den Magneten in Umfangsrichtung in dem Rad unterzubringen.

Werden mehrere Magnete in einem Rad angeordnet, so sind diese gleichmäßig auf den Umfang zu verteilen. Dies hat den Vorteil, dass auch Unwuchten, Höhenschläge und Seitenschläge erkannt werden können, die räumlich nur begrenzt im Umfang des Reifens auftreten können.

Besonders vorteilhaft ist die Verwendung eines einzelnen Magnetfeldsensors, der die Magnetfeldstärke in allen drei Raumrichtungen erfassen kann.

Mittels des Magnetfeldsensors und dem mit diesen erfassten Magnetfeldsensorsignalen kann auch die Bewegung einer mit einem Magneten ausgestatteten Pedale erkannt werden. Da bei der Bewegung der Pedale sowohl eine größere Frequenz als beim Vorder- oder Hinterrad erfolgt sowie zusätzlich eine Magnetfeldkomponente Bz in Richtung der Querachse auftritt, lassen sich diese Magnetfeldsensorsignale relativ einfach der Pedalbewegung zuordnen.

Weitere Vorteile ergeben sich aus der nachfolgenden Beschreibung von Ausführungsbeispielen bzw. aus den abhängigen Patentansprüchen.

### Kurze Beschreibung der Zeichnungen

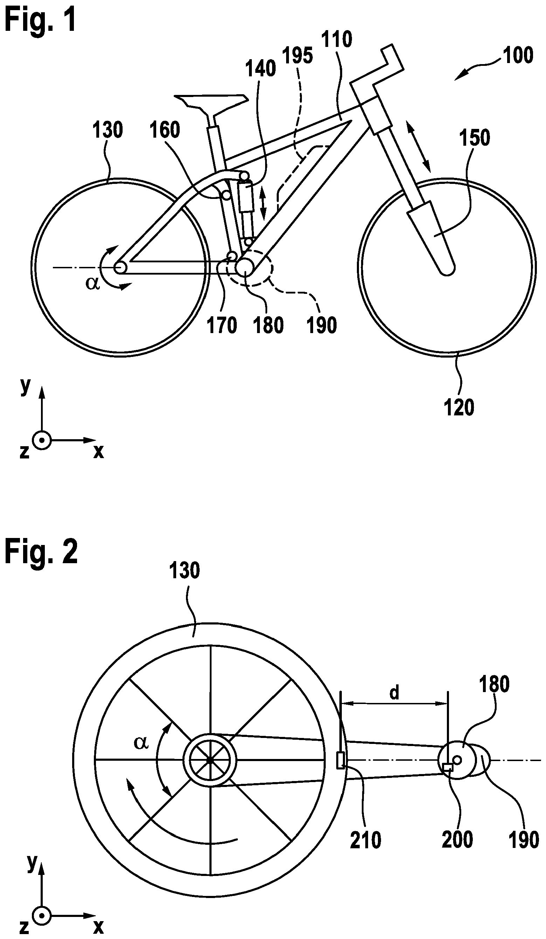

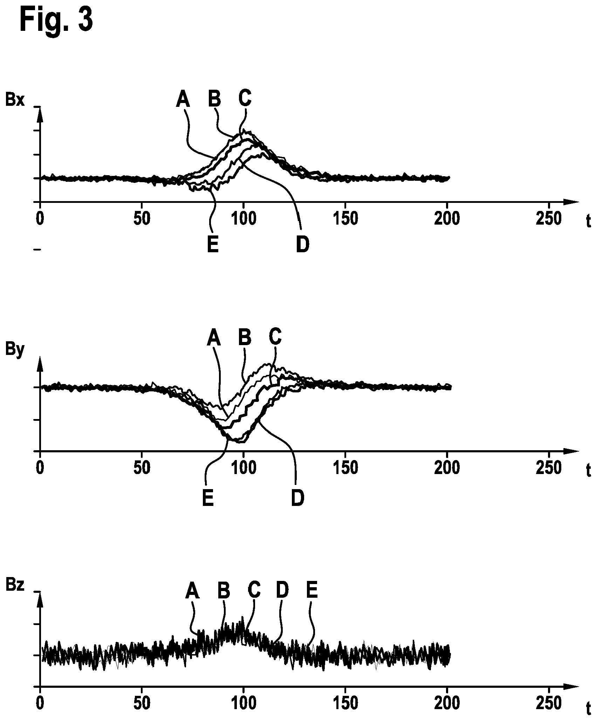

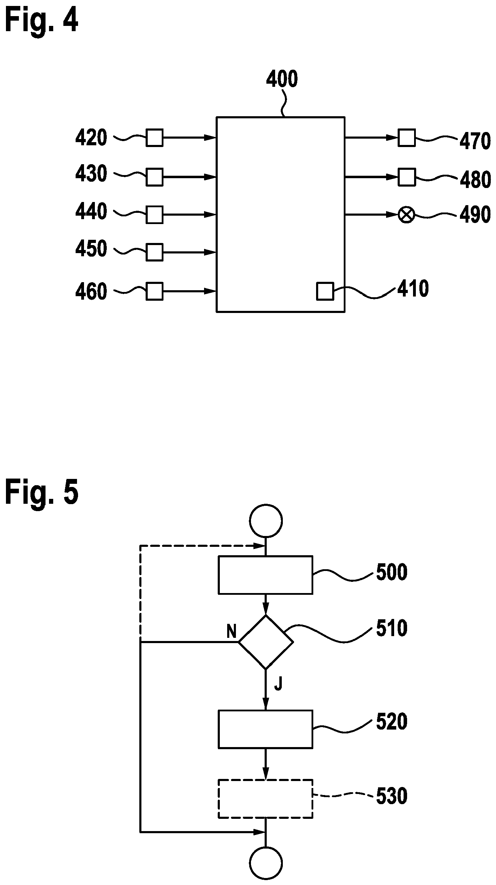

Figur 1 zeigt ein Zweirad, an dem die Erfindung eingesetzt werden kann. Mit der Figur 2 wird eine Detailansicht des Zweirads dargestellt. Die Diagramme der Figur 3 zeigen beispielhaft die erfassten Magnetfeldsensorsignale in den drei Raumrichtungen. In der Figur 4 ist eine Vorrichtung abgebildet, mit der das erfindungsgemäße Verfahren bzw. Steuerungsverfahren durchgeführt werden kann. Mit der Figur 5 wird beispielhaft ein mögliches Ausführungsbeispiele des erfindungsgemäßen Verfahrens mittels eines Flussdiagramms gezeigt.

### Ausführungsbeispiel

Die Funktionsweise der beanspruchten Erfindung wird im Folgenden anhand eines Fahrrads beschrieben. Allgemein lässt sich die Erfindung jedoch auch an jedem anderen Zweirad, z.B. einem Motorrad oder einem Elektrofahrrad anwenden. Es ist sogar möglich, die Erfindung an einem einachsigen zweirädrigen Fahrzeug anzuwenden, z.B. einem Segway. Der Einsatz bei einem Kraftfahrzeug, z.B. einem Pkw oder Lkw ist ebenfalls möglich.

Das Fahrrad 100 gemäß der Figur 1 ist mit einem Rahmen 110, z.B. bestehend aus einem Unterrohr, einem Sattelrohr und einem Oberrohr ausgestattet. Weiterhin weist das Fahrrad 100 eine Tretkurbeleinheit 180 auf, die ein Hinterrad 130 als Antriebs- oder auch Laufrad antreibt. Das Vorderrad 120 dient über den Lenker als Steuerrad, um die Richtung der Bewegung des Fahrrads 100 vorzugeben. Das in der Figur 1 dargestellte Fahrrad stellt ein sogenanntes Fully dar, d.h. mit einer ersten Dämpferkomponenten 140, die der Aufhängung des Hinterrads 130 zugeordnet ist und einer zweiten Dämpferkomponenten 150, die dem Vorderrad 120 zugeordnet ist. Die erste Dämpferkomponente 140 ist dabei mittels entsprechend beweglicher Elemente 160 und 170 derart am Rahmen 110 befestigt, dass das Hinterrad 130 gegenüber dem Rahmen 110 um einen Winkel α gedreht werden kann. Die zweite Dämpferkomponente 150 ermöglicht hingegen, dass das Vorderrad 120 relativ zum Lenker nach unten oder nach oben bewegt werden kann. Beide Dämpferkomponenten erlauben dabei gerade bei der Fahrt im Gelände eine individuelle Anpassung der Räder an den Untergrund. Neben dem besseren Bodenkontakt erhöht sich dadurch auch das Komfortempfinden des Fahrers auf unebenen Wegen, indem Stöße abgefedert werden.

Optional können weitere Dämpferkomponenten vorgesehen sein, die den Fahrkomfort oder die Fahrsicherheit erhöhen. Denkbar sind hier beispielsweise eine Satteldämpfung im Bereich des Sattels, um Stöße vom Untergrund vom Fahrer fern zu halten. Weiterhin ist denkbar, das Lenkrohr mit einem Dämpfer auszustatten, so dass extreme Lenkbewegungen verhindert werden.

Weiterhin kann an dem Fahrrad 100 eine Antriebseinheit 190 vorgesehen sein, z.B. ein Motor. In dem Fahrrad 100 gemäß der Figur 1 ist diese Antriebseinheit 190 im Bereich der Tretkurbeleinheit 180 angeordnet, jedoch kann diese auch in dem Rahmen selbst oder an einem der beiden Räder 120 bzw. 130 angebracht sein. Eine entsprechende Energiequelle 195 kann dabei sowohl am oder im Rahmen 110 sowie am nicht gezeigten Gepäckträger untergebracht sein.

In der Figur 2 ist beispielhaft das Hinterrad 130 mit der Tretkurbeleinheit 180 dargestellt, um die Funktionsweise der Erfindung deutlich zu machen. Statt einer einfachen Tretkurbeleinheit 180, bei der lediglich der Radfahrer den Antrieb des Fahrrads mittels der Betätigung der Tretkurbeln aufbringt, kann diese auch mit der Antriebseinheit 190 kombiniert sein. Mittels dieser kombinierten Tretkurbeleinheit/Antriebseinheit kann dann der Antrieb bzw. Vortrieb des Fahrrads ganz oder teilweise mittels Motorkraft oder Muskelkraft erzeugt werden.

Am Hinterrad 130 ist wenigstens ein Magnet 210 angeordnet, der sich bei der drehenden Bewegung des angetriebenen Hinterrades 130 selber mit dreht. In einer ersten Varianten ist der Magnet 210 mit seiner Nord-Süd-Richtung radial nach außen am Hinterrad 130 befestigt. Der Vorteil bei dieser Anordnung besteht darin, dass ein stärkeres Magnetfeld radial nach außen erzeugt wird, welches von einem Magnetsensor 200 einfacher erfasst werden kann. Die konkrete Ausrichtung des Nordpols oder des Südpols nach außen spielt für das erfindungsgemäße Verfahren zunächst jedoch keine Rolle. In einer zweiten, alternativen Varianten kann der Magnet 210 mit seiner Nord-Süd-Richtung auch in Umfangsrichtung angeordnet werden. Generell sollte der Magnet 210 im äußeren Bereich des Hinterrads 130 angeordnet sein. Dies kann dadurch realisiert werden, dass der Magnet 210 am oder im Mantel untergebracht ist. Alternativ kann der Magnet 210 jedoch auch an oder in der Felge angebracht sein. Letzteres hätte den Vorteil, dass der Magnet 210 einem geringeren Verschleiß unterliegt, da er gegenüber der Fahrbahn und der Verwalkung des Mantels geschützt ist. Optional kann vorgesehen sein, mehrere Magnete 210 im oder am Hinterrad 130 anzubringen. Hierdurch kann schneller auf die Auslenkung des Hinterrads 130 geschlossen werden, da kein vollständiger Umlauf des Rads notwendig ist, um die Bewegung zu detektieren. Voraussetzung ist hierbei jedoch, dass die Magnete 210 in gleicher Nord-Süd-Ausrichtung radial oder bezüglich des Umfangs eingebaut werden. Entsprechendes gilt für den oder die Magnete am oder im Vorderrad 120. Alternativ zu dieser Magnet-Ausrichtung kann auch ein Einlernvorgang durchgeführt werden, bei dem das System die Ausrichtung der Magnete durch eine gezielte Auslenkung des Rades selbsttätig erlernt.

Der Magnetsensor 200, der die Bewegung des Magneten 210 detektiert, ist im Ausführungsbeispiel gemäß der Figur 2 in der Nähe der Tretkurbeleinheit 190 angebracht, z.B. in oder an dem Gehäuse der Antriebseinheit 180. Dies hat den Vorteil, dass der Magnetsensor 200 eine geringe räumliche Distanz zum Magneten 210 am Hinterrad 130 mit dem Abstand d aufweist und somit die Erfassung des Magnetfelds erleichtert wird. Gleichzeitig oder alternativ kann der so angebrachte Magnetsensor 200 auch das Magnetfeld eines am Vorderrad 120 angebrachten Magneten erfassen. Mit der Anordnung des Magnetsensors 200 im Bereich der Tretkurbeleinheit 190 besteht weiterhin die Möglichkeit, zusätzlich das Magnetfeld eines an der Pedale angebrachten Magneten zu erfassen. Hierdurch kann beispielsweise die Trittfrequenz des Fahrradfahrers erfasst werden. Um die von verschiedenen bewegten Magnete erzeugten Magnetfelder zu unterscheiden, ist es jedoch notwendig, die Magnetfeldsensorsignale eindeutig den entsprechend palzierten Magneten zuzuordnen. Neben der vorstehend beschriebenen Anordnung des Magnetsensors 200 kann jedoch auch vorgesehen sein, dass dieser am Rahmen 110, z.B. am Unterrohr, am oder im Akkumulator 195 oder am Gepäckträger des Fahrrads 100 angebracht sein kann. Die Anordnung bzw. Kopplung des Magnetsensors 200 an den Rahmen 110 ist dabei derart vorgesehen, dass beide eine im Wesentlichen unbewegliche Einheit zueinander bilden und somit ortsfest sind. Durch die Fixierung des Magnetsensors 200 an den Rahmen 110 kann somit eine relative Bewegung der Magnete zum Rahmen 110 erfasst werden.

Mit einem geeigneten Magnetsensor 200 kann die Bewegung des Magneten 210 an der Hinterachse 130 in mehreren Richtungen erfasst werden. So ist zunächst die Erfassung des Magnetfelds des Magneten 210 in Bewegungsrichtung des Fahrrads 100, d.h. in x-Richtung gewünscht, um die Annährung bzw. Entfernung des Magneten 210 bei einem Umlauf des Hinterrads 130 bzw. des Laufrads zu erfassen. Typischerweise wird dabei das Magnetfeld des Magneten 210 nicht während des gesamtem Umlaufs erfasst, sondern ab einer Detektionsgrenze des Magnetsensors 200, die durch sein Auflösungsvermögen bestimmt wird, bis zur maximal erfassbaren Magnetfeldstärke im geringsten Abstand d zum Magnetsensor 200. Weiterhin kann auch die Bewegung des Magneten 210 in senkrechter γ-Richtung, d.h. in Bewegungsrichtung des Rades in Richtung der Hochachse des Fahrrads erfasst werden. Mit diesen beiden Richtungen kann die Bewegung des Rades in der xy-Ebene nachverfolgt werden. Auch die Bewegung des Magneten 210 in z-Richtung, d.h. zur Querrichtung bzw. zur Bewegungsrichtung des Fahrrads 100 kann erfasst werden. Aus diesen Sensorsignalen in z-Richtung, gegebenenfalls in Verbindung mit des Sensorsignalen in zumindest einer anderen Richtung, können sich beim Hinterrad 130 Verformungen des Rades ableiten lassen, wie beispielsweise einen Höhenschlag oder einen Seitenschlag. Beim Vorderrad 120 lässt sich über die Erfassung der z-Richtung des entsprechenden Magnetsensorsignals darüber hinaus die Lenkrichtung ableiten.

Um die gewünschten Magnetfeldsensorsignale zu erfassen, ist wenigstens ein Magnetfeldsensor 200 notwendig, der die absolute Magnetfeldstärke oder eine gerichtete Magnetfeldstärke erfasst. Bevorzugt wird dabei die Erfassung in Richtung der x-Richtung, da über die Annäherung des Magneten 210 an den Magnetfeldsensor 200 eine Aussage zumindest über die Drehgeschwindigkeit des Hinterrads 130 und somit die Fortbewegungsgeschwindigkeit des Fahrrads 100 getroffen werden kann. Das Magnetfeldsensorsignal in y- und/oder z-Richtung kann weiterhin sowohl mit verschiedenen Magnetfeldsensoren erfasst werden, die ebenfalls spezifisch auf eine Richtung ausgerichtet sind. Alternativ kann aber auch ein Magnetfeldsensor verwendet werden, der das Magnetfeldsensorsignal in wenigstens zwei Raumrichtung erfasst und auflöst. Bevorzugt wird ein kombinierter 3D Magnetfeldsensor eingesetzt. Dieser 3D Magnetfeldsensor kann darüber hinaus mit einem Beschleunigungssensor oder einem Gierratensensor kombiniert sein.

Durch die Erfassung wenigstens einer spezifischen Richtung des Magnetfeldsensorsignals können verschiedene Zustände der Fahrradkomponenten während der Fahrt erkannt und überwacht werden. Anhand der Messsignalverläufe der Magnetfeldstärke in den drei Raumrichtungen in den Diagrammen der Figur 3 wird beispielhaft die Verdrehung des Hinterrads 130 um den Winkel α bei einer dem Hinterrad zugeordneten ersten Dämpferkomponenten 140 dargestellt. Aufgetragen ist dabei jeweils die Magnetfeldstärke B während einer Umdrehung des Hinterrads 130 in einer Raumrichtung über die Zeit. Die Kurve A stellt eine Bewegung dar, bei der sich das Hinterrad 130 gegenüber dem Magnetfeldsensor nicht verdreht, d.h. bei dem die erste Dämpferkomponente 140 weder gestaucht, noch gestreckt wird. Die Kurve A stellt somit die Ausgangslage oder Nulllage dar. Bei der Kurve B hingegen wird die erste Dämpferkomponente 140 gestreckt, so dass das Hinterrad 130, z.B. während eines Sprungs oder eines Abhebens des Hinterrads 130, nach unten, in Richtung des Untergrund gedrückt wird, so dass eine bessere Bodenhaftung erreicht wird. Die Kurven C, D und E zeigen hingegen Situationen, in den das Hinterrad 130 nach oben gedrückt und somit gegenüber der Ausgangslange nach oben verdreht wird. Hierbei wird die erste Dämpferkomponente 140 gestaucht, um diese Bewegung auszugleichen und einen dabei entstehenden Schlag abzufedern. Diese unterschiedlichen Bewegungen des Hinterrads 130 bzw. der ersten Dämpferkomponenten 140 spielen sich in der xy-Ebene ab, so dass die Messsignale des Magnetfeldsensors lediglich in Bx- und By-Richtung unterschiedlichen Messwertgrößen zeigen. In Bz-Richtung ändert sich die Ausrichtung des Magneten 210 nicht, weshalb sich hier ein einheitliches Bild der Messwertsignale zeigt.

Bei einem Auftreten eines Bz-Messwertsignals in Abhängigkeit der Bewegung des Magneten 210 im Hinterrad 130 lassen sich Aussagen über einen Höhen- und/oder Seitenschlag des Hinterrads 130 ableiten. Diese Aussagen können über entsprechende Messsignale in Bx- und/oder By-Richtung bestätigt werden. Denkbar ist auch, dass ein Höhen- oder Seitenschlag erst durch die Erfassung mehrerer Umläufe des Hinterrads genau erkannt werden kann.

Werden entsprechenden Messsignalverläufe für einen Magneten am Vorderrad 120 erkannt, kann bei einer Bewegung in der xy-Ebene auf eine Stauchung oder Streckung der zweiten Dämpferkomponenten 150, z.B. auf ein Eintauchen des Lenkervorbaus erkannt werden. Wie bereits ausgeführt, können Messsignale der Magnetfeldstärke in Bz-Richtung neben einem Höhen- oder Seitenschlag des Vorderrads 120 auch eine Lenkbewegung erkennen. Um diese Eigenschaften zu erkennen und voneinander zu unterscheiden, ist gegebenenfalls die Relation der Magnetfeldstärken sowie der Verlaufs der Messwertsignale für die Magnetfeldstärke in allen drei Raumrichtungen heranzuziehen. Optional können auch weitere Sensorsignale ausgewertet werden, z.B. Beschleunigungssignale oder Signale von Neigungswinkelsensoren.

Bei der Erfassung von Magnetfeldsensorsignalen sowohl eines Magneten am Vorderrad 120 als auch am Hinterrad 130 ist erforderlich, dass die erfassten Messwerte eindeutig den entsprechenden Magneten zugeordnet werden, um eine Zuordnung der Information für das Vorder- oder Hinterrad zu ermöglichen. Dies kann dadurch erreicht werden, dass die Magnete im Vorderrad und Hinterrad unterschiedlich gestaltet sind, so dass sich die Messwerte der Magnetfeldstärke voneinander separieren lassen. So ist denkbar, jeweils unterschiedliche minimale Abstände zwischen den Magneten und dem Magnetfeldsensor vorzusehen. Eine weitere Möglichkeit, unterschiedliche Sensorsignale zu erzeugen besteht darin, die Magnete unterschiedlich stark auszulegen oder die Geometrien zu variieren. So würden längere oder breitere Magnete entsprechend breitere Messwertsignalverläufe erzeugen. Auch die unterschiedliche Polarisation der Magnete im Vorder- und Hinterrad würde eine eindeutige Zuordnung im Messwertsignalverlauf erzeugen.

Entsprechend könnte man auch bei der Verwendung von mehreren Magneten in den Rädern vorgehen, um die zeitliche Auflösung bzw. schnellere Ableitung von Veränderungen zu erkennen. Hier ist beispielsweise auch denkbar, jeweils einen der mehreren Magneten in einem Rad bewusst anders zu gestalten, um einen vollständigen Umlauf und ggf. eine Normierung erzeugen zu können, gerade bei der Verwendung einer unbekannten Anzahl von Magneten. Ansonsten kann selbstverständlich auch über die Kenntnis der Anzahl der Magnete auf einen vollständigen Umlauf geschlossen werden.

In der Figur 4 wird anhand eines Blockschaltbilds eine mögliche Vorrichtung zur Realisierung der Erfindung dargestellt. Kernstück dieser Vorrichtung ist eine Auswerteeinheit 400 bzw. eine damit kombinierte Steuereinheit, die optional mit einem Speicher 410 ausgestattet ist. Die Auswerteeinheit 400 erfasst mittels eines Magnetsensors 420 entsprechende Messwerte der Magnetfeldstärke. Bei diesem Magnetfeldsensor 420 kann es sich dabei um einen Sensor handeln, der lediglich die absolute Magnetfeldstärke des Magnetfelds erfasst oder um einen Magnetfeldsensor, der wenigstens zwei oder sogar drei Raumrichtungen der Magnetfeldstärke separat erfassen kann. Alternativ kann auch vorgesehen sein, dass die Auswerteeinheit 400 gezielt mittels eines speziellen Magnetsensors 430 die Magnetfeldstärke Bx in x-Richtung erfasst. Optional kann vorgesehen sein, dass zusätzliche (Einzel-) Magnetsensoren 440 bzw. 450 die Magnetfeldstärke By bzw. Bz in y- bzw. z-Richtung erfassen und der Auswerteeinheit 400 zur Verfügung stellen. Darüber hinaus ist denkbar, dass die Auswerteeinheit 400 die Sensorsignale eines oder mehrerer weiterer Sensoren 460 erfasst. Hier könnten beispielsweise Beschleunigungssignale, Neigungssignale oder Informationen über den Betrieb einer am Zweirad befindlichen Antriebseinheit erfasst werden.

Ausgehend von den ausgewerteten Messwertsignale der Magnetfeldstärke und der daraus abgeleiteten Bewegung bzw. Verdrehung und Beanspruchung der Dämpferkomponenten kann die Auswerteeinheit 400 diese Information an weiterverarbeitende Systeme, wie beispielsweise eine Steuereinrichtung 470 oder einer Anzeige 490, weitergeben. Sie kann jedoch auch im Rahmen der Funktion als Steuereinheit selbsttätig die Antriebseinheit 480 am Zweirad bzw. Fahrrad 100 ansteuern. Denkbar ist auch, dass in Abhängigkeit der Erkennung einer Verdrehung eines oder beider Räder die erste und/oder die zweite Dämpferkomponente angesteuert wird. Hier könnte die Dämpfungseigenschaft zur Stabilisierung der Fahrt entsprechend verändert werden.

Anhand des Flussdiagramms der Figur 5 wird ein typisches Verfahren dargestellt, welches mit der vorliegenden Erfindung realisiert werden kann. Nach dem Start des Verfahrens wird in einem ersten Schritt 500 zumindest ein Magnetfeldsensorsignal erfasst. Hierbei kann es sich sowohl um einen Absolutwert handeln als auch um ein mit einer Richtung verbundenes Signal. So ist denkbar, dass zumindest ein erstes gerichtetes Messwertsignal z.B. in x-Richtung bzw. in Bewegungsrichtung des Fahrrads erfasst wird. Optional werden daneben jedoch auch die Magnetfeldstärke in y- und/oder z-Richtung erfasst. Die Erfassung kann dabei so lange erfolgen, bis erkannt wird, dass eine Auswertung möglich ist, z.B. über wenigstens einen vollständigen Umlauf des einen Rads, welches überwacht wird. Alternativ wird im nächsten Schritt 510 überprüft, ob ausreichend Daten für das Magnetfeldsensorsignal bzw. die Magnetfeldsensorsignale vorliegen, um eine Auswertung durchführen zu können. Falls nicht, werden erneut Magnetfeldsensorsignale im Schritt 500 erfasst. Die Auswertung im Schritt 510 kann neben der Erfassung der Annäherung des Magneten an den Magnetsensor durch einen Vergleich mit entsprechenden Schwellenwerten oder Datenbanken Aussagen über die Federung der ersten und/oder zweiten Dämpferkomponenten, dem Eintauchen des Vorderrads, einen Höhenschlag bzw. einen Seitenschlag am Vorder- und/oder Hinterrad sowie die Radeinspannung liefern. Die so abgeleitete Information kann im Nachfolgenden Schritt 520 zur weiteren Verarbeitung bereit gestellt oder auf einer Anzeige 490 dem Fahrer mitgeteilt werden. So kann der Fahrer rechtzeitig über Unwuchten des Rades informiert werden, so dass weitere Beschädigungen oder eine Unfallgefährdung vermieden werden. Bei der Anbringung des Magneten am äußeren Rand des Mantels kann der Fahrer beispielsweise über einen Reifendruckverlust informiert werden, da sich in diesem Fall der Abstand des Magneten zum Magnetsensor verringert. Sollte sich keine relevante Information im Schritt 510 ergeben, kann mit dem Schritt 500 ein erneuter Umlauf des entsprechenden Rads erfasst werden oder das Verfahren beendet werden.

In einer weitere Ausführung des erfindungsgemäßen Verfahrens kann die Information über eine Verdrehung des Vorder- und/oder Hinterrads bzw. über die Einstellung einer der Dämpferkomponenten in einem nach dem Schritt 510 vorgesehenen Schritt 530 dazu genutzt werden, aktiv auf eine Komponente des Fahrrads 100 einzuwirken. So ist denkbar, dass bei der Erkennung eines Eintauchens der zweiten Dämpferkomponenten 150 am Vorderrad, gegebenenfalls über einen Grenzwert hinaus, die Antriebseinheit 180 oder eine Bremse am Fahrrad derart angesteuert wird, dass der Vortrieb reduziert wird. Durch diese Ansteuerung lässt sich ein Unfall oder ein Überschlag verhindern. Entsprechend kann die Antriebseinheit, eine Bremse oder die zweite Dämpferkomponente angesteuert werden, wenn das Hinterrad 130 eine zu große Auslenkung aus Normallage zeigt. Wie bereits ausgeführt, lässt sich aus den Magnetfeldsensorsignalen in z-Richtung auch die Lenkrichtung des Vorderrads 120 ableiten. Diese Information kann zusammen mit zusätzlichen Informationen wie der Geschwindigkeit oder Neigungssensorsignalen ebenfalls für stabilisierende Eingriffe in den Betriebsablauf genutzt werden. Auch eine reine Dokumentation der Geschwindigkeit bzw. der Richtung für Navigationszwecke ist möglich.

Zur Erkennung der Nulllage bzw. Ausgangslage, aus der die Drehung heraus erkannt wird, kann eine Kalibrierung vorgenommen werden. Diese Kalibrierung kann entweder manuell unter definierten Fahrsituationen vorgenommen werden oder beim ersten Betrieb des Fahrzeugs bzw. nach Reparaturen automatisch erfolgen. Weiterhin ist auch denkbar, dass die Nulllage bzw. Ausgangslage, mit der die erfasste Bewegung verglichen wird, im Speicher 410 abgelegt ist. In diesem Fall kann das Verfahren ohne separate Einlernphase durchgeführt werden. Hierzu ist jedoch notwendig, dass sowohl die Polarisation und die Anordnung der Magnete im Speicher 410 hinterlegt werden.

## Patentansprüche

1. Verfahren zur Erfassung der Auslenkung wenigstens eines Rades (120, 130) eines Zweirads (100), insbesondere eines Fahrrads, wobei das Zweirad (100) einen mit dem Rahmen (110) gekoppelten Magnetfeldsensor (200) und wenigstens ein Rad (120, 130) mit wenigstens einem Magneten (210) aufweist, wobei
• erste Magnetfeldsensorsignale des Magneten (210) erfasst werden, welche die Drehbewegung des Rades (150) repräsentieren, **dadurch gekennzeichnet, dass**
• eine Auslenkungsinformation des Rades (120, 130) in Abhängigkeit der ersten Magnetfeldsensorsignale erzeugt wird.

2. Verfahren nach Anspruch 1, **dadurch gekennzeichnet, dass**
• zweite Magnetfeldsensorsignale des Magneten (210) erfasst werden, welche die Drehbewegung des Rades (150) repräsentieren, wobei die ersten und zweiten Magnetfeldsensorsignale unterschiedliche Raumrichtungskomponenten enthalten, und
• in Abhängigkeit der ersten und zweiten Magnetfeldsensorsignale die Auslenkungsinformation des Rades (120, 130) erzeugt wird.

3. Verfahren nach Anspruch 1 oder 2, **dadurch gekennzeichnet, dass** die ersten Magnetfeldsensorsignale die Magnetfeldkomponente (Bx, By) des bewegten Magneten (210) in Richtung der Hochachse (y) oder der Bewegungsrichtung (x) des Zweirads repräsentieren.

4. Verfahren nach einem der vorhergehenden Ansprüche, **dadurch gekennzeichnet, dass** die Auslenkungsinformation eine Verdrehung des Rades (120, 130) um die Richtung der Querachse (z) des Zweirads (100) repräsentiert.

5. Verfahren nach Anspruch 1 oder 2, **dadurch gekennzeichnet, dass** die ersten Magnetfeldsensorsignale die Magnetfeldkomponente (Bz) des bewegten Magneten (210) in Richtung der Querachse (z) repräsentieren.

6. Verfahren nach einem der Ansprüche 1, 2 oder 5, **dadurch gekennzeichnet, dass** die Auslenkungsinformation eine Verdrehung des Rades (120, 130) um die Hochachse (y) des Zweirads (100) repräsentiert.

7. Verfahren zur Erfassung der Auslenkung wenigstens eines Rades (120, 130) eines Zweirads (100), insbesondere eines Fahrrads, nach einem der vorhergehenden Ansprüche, wobei das Zweirad (100) sowohl an dem Vorderrad (120) als auch an dem Hinterrad (130) jeweils wenigstens einen Magneten (210) aufweist,
**dadurch gekennzeichnet, dass**
eine Zuordnung der erzeugten Auslenkungsinformation zu dem Vorderrad (120) oder dem Hinterrad (130) in Abhängigkeit von wenigstens der ersten Magnetfeldsensorsignale erfolgt.

8. Verfahren nach Anspruch 7, **dadurch gekennzeichnet, dass** die Zuordnung der erzeugten Auslenkungsinformation zu dem Vorderrad (120) oder dem Hinterrad (130) in Abhängigkeit der Stärke, der Polarisation und/oder der Breite der einzelnen zeitaufgelösten ersten Magnetfeldsensorsignale erfolgt.

9. Verfahren nach Anspruch 7 oder 8, **dadurch gekennzeichnet, dass**
• dritte Magnetfeldsensorsignale des wenigstens einen Magneten (160, 170) erfasst werden, welche die Drehbewegung des Rades (150) repräsentieren, wobei die ersten, zweiten und dritten Magnetfeldsensorsignale unterschiedliche Raumrichtungskomponenten enthalten, und
• die Zuordnung der erzeugten Auslenkungsinformation zu dem Vorderrad (120) oder dem Hinterrad (130) in Abhängigkeit von wenigstens zwei unterschiedlichen Raumrichtungskomponenten der drei Magnetfeldsensorsignale erfolgt.

10. Steuerungsverfahren für eine Dämpferkomponente eines Zweirads (100), wobei in Abhängigkeit von einer mittels einem der Verfahren nach Anspruch 1 bis 9 erzeugten Auslenkungsinformation die Dämpfungseigenschaft der am Zweirad (100) angeordneten Dämpferkomponente (140, 150) gesteuert wird.

11. Steuerungsverfahren nach Anspruch 10, **dadurch gekennzeichnet, dass** in Abhängigkeit der Erkennung einer Verdrehung des Rades (120, 130) um die Querrichtung (z) eine dem Hinterrad (130) oder dem Sattel zugeordnete Dämpferkomponente (140) angesteuert wird, insbesondere eine Dämpferkomponente, die die Verdrehung dämpft.

12. Steuerungsverfahren nach Anspruch 10 oder 11, **dadurch gekennzeichnet, dass** in Abhängigkeit der Erkennung einer Verdrehung des Rades (120, 130) um die Hochachse (y) eine dem Vorderrad (130) zugeordnete Dämpferkomponente (150) angesteuert wird, insbesondere eine Dämpferkomponente, die die Lenkbewegung dämpft.

13. Vorrichtung (400) zur Erfassung der Auslenkung wenigstens eines Rades (120, 130) eines Zweirads (100), insbesondere eines Fahrrads, mit einem Verfahren gemäß der Ansprüche 1 bis 9, wobei das Zweirad (100) einen mit dem Rahmen (110) gekoppelten Magnetfeldsensor (200) und wenigstens ein Rad (120, 130) mit wenigstens einem Magneten (210) aufweist, wobei die Vorrichtung (400)
• erste Magnetfeldsensorsignale des Magneten (160, 170) erfasst, welche die Drehbewegung des Rades (120, 130) repräsentieren,
**dadurch gekennzeichnet, dass** die Vorrichtung
• eine Auslenkungsinformation des Rades (120, 130) in Abhängigkeit der ersten Magnetfeldsensorsignale erzeugt.

14. Steuerungsvorrichtung (400) einer Dämpferkomponente eines Zweirads (100) zur Durchführung eines Verfahrens nach einem der Ansprüche 10 bis 12, wobei in Abhängigkeit von einer mittels einer Vorrichtung nach Anspruch 13 erzeugten Auslenkungsinformation die Dämpfungseigenschaft der am Zweirad angeordneten Dämpferkomponente (140, 150) gesteuert wird.

15. Zweirad (100), insbesondere ein Fahrrad, mit einer Vorrichtung (400) nach Anspruch 13, welche ein Verfahren nach einem der Ansprüche 1 bis 9 durchführt, oder einer Steuerungsvorrichtung (400) nach Anspruch 14, welche ein Steuerungsverfahren nach einem der Ansprüche 10 bis 12 durchführt, wobei das Zweirad (100) einen mit dem Rahmen (110) gekoppelten Magnetfeldsensor (200) und wenigstens ein Rad (120, 130) mit wenigstens einem Magneten (210) aufweist, wobei die Vorrichtung (400) oder die Steuerungsvorrichtung (400)
• erste Magnetfeldsensorsignale des Magneten (160, 170) erfasst, welche die Drehbewegung des Rades (150) repräsentieren,
**dadurch gekennzeichnet, dass** die Vorrichtung (400) oder die Steuerungsvorrichtung (400)
• eine Auslenkungsinformation des Rades (120, 130) in Abhängigkeit der ersten Magnetfeldsensorsignale erzeugt.

16. Zweirad (100) nach Anspruch 15, **dadurch gekennzeichnet, dass** der wenigstens eine Magnet (160, 170) im Außenbereich des Rades (150) untergebracht ist, insbesondere in oder an der Felge.

17. Zweirad (100) nach einem der Ansprüche 15 oder 16, **dadurch gekennzeichnet, dass** die Ausrichtung des wenigstens einen Magneten (160, 170) radial erfolgt.

18. Zweirad (100) nach einem der Ansprüche 15 bis 17, **dadurch gekennzeichnet, dass** in dem wenigstens einen Rad (120, 130) wenigstens zwei Magnete (210) angeordnet sind, wobei insbesondere vorgesehen sind, dass die Magnete (210) gleichmäßig auf dem Umfang des Rades (120, 130) verteilt sind.

19. Zweirad (100) nach einem der Ansprüche 15 bis 18, **dadurch gekennzeichnet, dass** sowohl im Vorderrad (120) als auch im Hinterrad (130) des Zweirads (100) wenigstens jeweils ein Magnet (210) angeordnet ist, wobei vorgesehen ist, dass sich die Magnete im Vorderrad und im Hinterrad hinsichtlich ihrer Umfangslänge, Breite, magnetischen Stärke oder magnetischer Polarisation unterscheiden.

20. Zweirad (100) nach einem der Ansprüche 15 bis 19, **dadurch gekennzeichnet, dass** der Magnetfeldsensor (200) im oder am Motor (145) angeordnet ist.

21. Zweirad (100) nach einem der Ansprüche 15 bis 20 **dadurch gekennzeichnet, dass** der Magnetfeldsensor (200) die Erfassung der Magnetfeldkomponenten in allen drei Raumrichtungen ermöglicht.
